# EUROPÄISCHE PATENTSCHRIFT

(11) **EP 2 765 950 B1**
(45) Veröffentlichungstag und Bekanntmachung des Hinweises auf die Patenterteilung: **12.07.2017**
(21) Anmeldenummer: 12783148.5
(22) Anmeldetag: 15.10.2012
(51) Int. Cl.: B22F 3/10, C04B 35/64, A61C 13/20, F27B 14/04, B22F 3/00, F27B 14/08, F27D 7/02

(54) **SYSTEM ZUM SINTERN VON METALL ODER KERAMIK**
SYSTEM FOR SINTERING METAL OR CERAMICS
SYSTÈME DE FRITTAGE DE MÉTAL OU DE CÉRAMIQUE

(30) Priorität: 13.10.2011 DE 202011106734 U
(43) Veröffentlichungstag der Anmeldung: 20.08.2014
(73) Patentinhaber: WDT-Wolz-Dental-Technik GmbH, 55566 Bad Sobernheim (DE)
(72) Erfinder: WOLZ, Stefan, 55566 Bad Sobernheim (DE)
(74) Vertreter: Götz, Georg Alois
(86) Internationale Anmeldenummer: PCT/EP2012/070429
(87) Internationale Veröffentlichungsnummer: WO 2013/053950

(56) Entgegenhaltungen:
- EP-A2- 0 524 438
- WO-A1-2011/020688

## Beschreibung

Die Erfindung betrifft eine Vorrichtung zum sauerstofffreien Sintern von Metall oder Keramik, insbesondere für die Dentaltechnik. Bei dieser Vorrichtung ist ein mit Schutzgas beaufschlagbarer Sinterraum durch eine Bodenplatte und eine Haube gebildet. Das Schutzgas ist mittels einer Schutzgaszufuhr einleitbar und über eine Schutzgasabfuhr abführbar. Zwischen der Schutzgaszufuhr und der Schutzgasabfuhr sind ein Strömungskanal und/oder ein Strömungsspalt angeordnet. Ferner betrifft die Erfindung eine Verwendung der genannten Vorrichtung.

Sinteröfen sowie deren dazugehöriger Sinterprozess werden vor allem in der Pulvermetallurgie und in der Keramikindustrie eingesetzt. Bei der Herstellung von Sintergegenständen findet ein oberflächliches Zusammenwachsen von Materialkörnern durch Diffusion von Material an den Kontaktpunkten statt, wodurch ein fester Körper entsteht. Die Verschmelzung findet bei Temperaturen knapp unterhalb des Schmelzpunktes des jeweiligen Materials in einem Sinterofen statt. Es ist üblich bei der Herstellung von Sintermetallgegenständen aus Metallpulver den Sintervorgang unter Schutzgasatmosphäre durchzuführen. Hierbei wird in der Regel Argon als billigstes Edelgas eingesetzt. Die Erfahrung mit diesem Verfahren hat aber gezeigt, dass selbst bei extremer Flutung des Innenraumes eines Sinterofens noch Restsauerstoff vorhanden ist, der zur Verfärbung und Oxidation des Sinterobjekts führt. Dieser Effekt ist insbesondere in der Dentaltechnik störend, wo die Sintertechnik für verschiedene Arbeiten eingesetzt wird. Eine Alternative zur Verwendung von Schutzgas bietet die Sinterung unter Vakuum.

Prinzipiell sind schon Sinteröfen bekannt, die ein vollkommen sauerstofffreies Sintern ermöglichen. Ein Einsatz dieser aufwendigen Öfen, die für wissenschaftliche Untersuchungen entwickelt wurden, verbietet sich schon aus Kostengründen in der Dentaltechnik.

Es wurden verschiedene Vorschläge gemacht, um ein sauerstofffreies Sintern zu ermöglichen. Gemäß der Druckschriften DE 20 2010 002 533 U1, DE 20 2010 007 606 U1, WO 2011/020688 A1 sowie DE 20 2011 005 465 U1 wurde eine beachtliche Verbesserung der Sauerstofffreiheit erzielt. Die Grundidee der Druckschriften besteht darin, den Sinterraum, in dem das Produkt gesintert wird, von dem eigentlichen Sinterofen zu trennen. Mit dieser Technik gelingt es dennoch nicht vollständig, eine Diffusion von Sauerstoff in den Sinterraum zu verhindern.

Es ist daher Aufgabe der in Anspruch 1 angegebenen Erfindung, eine Sauerstofffreiheit in Sinteröfen während eines Sintervorgangs mit einfachen Mitteln zu erzielen, wie sie nur bei aufwendigen Sintervorrichtungen möglich ist.

Zur Lösung der Aufgabe wird die im Anspruch 1 angegebene Vorrichtung und im Anspruch 12 angegebene Verwendung vorgeschlagen. Optionale vorteilhafte Ausgestaltungen der Erfindung ergeben sich aus den abhängigen Ansprüchen. Die Vorrichtung der Erfindung soll insbesondere die Dentaltechnik beim sauerstofffreien Sintern von Metall oder Keramik unterstützen. Die Vorrichtung zum sauerstofffreien Sintern umfasst einen Sinterraum, der mit Schutzgas beaufschlagbar ist. Der Sinterraum ist durch eine Bodenplatte und eine Haube gebildet. Das Schutzgas ist mittels einer Schutzgaszufuhr einleitbar und über eine Schutzgasabfuhr abführbar. Zwischen der Schutzgaszufuhr und der Schutzgasabfuhr sind ein Strömungskanal und/oder ein Strömungsspalt angeordnet.

Der Sinterraum ist während des Sintervorgangs bzw. im Betrieb mit Schutzgas beaufschlagt, damit der Sauerstoff verdrängt und/oder abtransportiert wird. Es tritt jedoch Sauerstoff an einer unvermeidbaren, diskreten oder kontinuierlich umlaufenden Undichtigkeit ein. Diese so genannte undichte Stelle beziehungsweise unvermeidbare Undichtigkeit stellt beispielsweise die bearbeitete bzw. geschliffene Auflagefläche der Bodenplatte dar. Aufgrund von den Temperaturen und/oder der Ausdehnungskoeffizienten der Werkstoffe sowie des Gasdrucks oder auch anhand von Oxidresten entsteht ein "Luftspalt", wodurch Sauerstoff an der umlaufenden Auflagefläche der Bodenplatte, auf der die Haube sitzt, eindringen kann. Um das Eintreten von Sauerstoff an der Auflagefläche und somit an der unvermeidbaren umlaufenden Undichtigkeit zu verhindern, befindet sich zwischen der Bodenplatte und dem oder den Tiegelschalen-Tragmitteln oder dem Sintertiegel ein Strömungsspalt oder ein Strömungskanal. Der Strömungsspalt und/oder auch der Strömungskanal führen an mindestens einer Schutzgaszufuhr und/oder Schutzgasabfuhr vorbei. Außerdem kann der Strömungskanal sich in einen flächigen oder in der Breite ausgedehnteren Strömungsspalt erweitern. Neben einem Strömungsspalt und einem Strömungskanal gibt es noch eine weitere Spaltausführung, einen Umlaufspalt.

Der Strömungsspalt und/oder der Strömungskanal besitzt eine geringere Höhe oder Querschnittserstreckung im Vergleich zur Querschnittsfläche der Schutzgaszufuhr und der Schutzgasabfuhr. Ein Umlaufspalt hingegen besitzt eine geringere Breite im Vergleich zur Querschnittsfläche der Schutzgaszufuhr und der Schutzgasabfuhr. Die Durchgänge der Schutzgaszufuhr und der Schutzgasabfuhr sowie des Strömungsspalts, Strömungskanals oder des Umlaufspalts weisen jeweils eine quer zur Strömungsrichtung verlaufende, lichte Innenweite auf. Die Innenweiten der Schutzgaszufuhr- oder der Schutzgasabfuhr-Durchgänge sind weiter als die Innenweiten des Strömungsspalts, Umlaufspalts oder Strömungskanals. Durch diese Ausgestaltung wird eine Beschleunigung des Schutzgases im Strömungsspalt, Umlaufspalt oder Strömungskanal gegenüber der Zufuhr und Abfuhr erzielt. Des Weiteren entspricht der beim eingeleiteten Schutzgas vorherrschende Druck im Sinterraum mindestens dem atmosphärischen Druck. Bei einer Verkleinerung des Strömungsspalts oder des Strömungskanals steigt die Strömungsgeschwindigkeit beziehungsweise die Fließgeschwindigkeit des Schutzgases. Dies führt zu einer Reduktion der nötigen Schutzgasmenge um weniger als 1,5 Liter.

Das eingeleitete Schutzgas, das durch den Strömungsspalt oder Strömungskanal beschleunigt wird, transportiert den eindringenden Sauerstoff ab. Dies geschieht dadurch, dass durch die Beschleunigung des Schutzgases die Sauerstoffrestmenge aufgewirbelt wird und nach Art eines Venturieffekts eine Sogwirkung erzielt wird, um die Sauerstoffrestmenge durch Bohrungen und/oder durch Schutzgasabfuhr-Durchgänge aus dem Sinterraum abzuführen. Mit der erfindungsgemäßen Vorrichtung lässt sich somit ein Abführen von Sauerstoffpartikeln im Sinterraum erzielen, indem beim mit dem Sinterraum in Wirkungsverbindung tretenden Schutzgas eine Erhöhung der Fließgeschwindigkeit und eine Erniedrigung des Druckes herbeigeführt werden. Durch den Strömungsspalt oder den Strömungskanal wird mittels des eingeleiteten Schutzgases etwa eindringender Sauerstoff abtransportiert, wobei eine etwa aufgewirbelte Sauerstoffrestmenge über eine mit der Schutzgasabfuhr in Verbindung stehende Bohrung abgeführt wird, welche in dem oder den Tiegelschalen-Tragmitteln angeordnet ist.

Die Bodenplatte und die Haube schließen den Sinterraum ein und somit können sich die Schutzgaszufuhr- und/oder die Schutzgasabfuhr-Durchgänge in der Bodenplatte und/oder in der Haube befinden. Die Schutzgaszufuhr und/oder die Schutzgasabfuhr sind an einer Außenfläche der Haube und/oder an der Bodenplatte angeordnet. Die Durchgänge können senkrecht von unten nach oben durch die Bodenplatte führen oder sie führen horizontal in die Bodenplatte hinein und enden senkrecht zum Sinterraum hin. Das bedeutet, dass die Schutzgaszufuhr- und/oder die Schutzgasabfuhr-Durchgänge entweder gerade oder rechtwinklig ausgeführt werden können. Eine weitere Ausführungsmöglichkeit, die Haube mit den benötigten Schutzgas-Durchgängen zu versehen, ist ebenso möglich. Diese können senkrecht beziehungsweise radial oder schräg zur Mantelfläche oder seitlichen Haubenaußenflächen und/oder achsparallel oder auch schräg zur Mittelachse verlaufen. Des Weiteren können die Anzahl und die Anordnung der Schutzgaszufuhr- und/oder der Schutzgasabfuhrmittel variieren. Es müssen jedoch mindestens eine Zufuhr- und eine Abfuhreinrichtung für das Schutzgas vorhanden sein, damit das Schutzgas den Sinterraum fluten kann und somit der Sauerstoff vor dem Eindringen in den Sinterraum gehindert wird. Nach einer vorteilhaften Erfindungsausbildung ist der Sinterraum als Einheit aus dem Sinterofen entnehmbar, indem beispielsweise die Haube von der Bodenplatte abgenommen wird.

Auf der Bodenplatte liegt entweder ein Sintertiegel direkt auf oder es befinden sich ein oder mehrere Tiegelschalen-Tragmittel zwischen Sintertiegel und Bodenplatte. Somit liegt ein Sintertiegel auf den oder dem Tiegelschalen-Tragmitteln oder auf einer Bodenplatte auf. Das Tiegelschalen-Tragmittel kann auch mehrere einzelne Bauteile bzw. Einzelteile umfassen, wie zum Beispiel eine Deckplatte und eine Trägerplatte. Das Tiegelschalen-Tragmittel oder der Sintertiegel selbst weist zur Bodenplatte hin einen vorbestimmten Abstand auf. Dieser Abstand zwischen Bodenplatte und Tiegelschalen-Tragmittel oder Sintertiegel wird durch eine vorteilhafte Gestaltung des Tiegelschalen-Tragmittels bzw. Deckplatte oder Sintertiegel bestimmt. Das Tiegelschalen-Tragmittel oder der Sintertiegel besitzt zur Bodenplatte hin mindestens zwei diskrete Einzelfüße oder einen um eine Achse kontinuierlich umlaufenden Ringfuß. Es können dabei beliebig viele Einzelfüße an dem oder den Tiegelschalen-Tragmitteln oder Sintertiegel angebracht sein. Der resultierende Abstand stellt den Strömungsspalt oder den Strömungskanal dar, um das einzuleitende Schutzgas beschleunigen zu können. Bei der Verwendung eines um eine Achse umlaufenden Ringfußes entsteht ein Umlaufspalt. Das bedeutet, dass der Strömungsspalt und/oder der Strömungskanal zumindest teilweise als Umlaufspalt gestaltet sind, indem sie um eine Mittelachse geführt sind. Dieser Strömungsspalt und/oder Strömungskanal oder Umlaufspalt führt an mindestens einer Schutzgaszufuhr und/oder Schutzgasabfuhr vorbei. Das durch die Schutzgaszufuhr einströmende Schutzgas wird aufgrund der spaltartigen Verengung beschleunigt. Dadurch umströmt das eingeleitete Schutzgas mit relativ hoher Geschwindigkeit den Sinterraum, so dass der Sauerstoff keine Möglichkeit erhält an den undichten Stellen einzudringen.

Auf dem oder den Tiegelschalen-Tragmitteln befindet sich ein Sintertiegel, in dem ein oder mehrere zu sinternde Objekte gesintert werden. Ein oder mehrere zu sinternde Objekte sind durch mindestens eine Haube abgedeckt bzw. geschützt. Eine Haube kann direkt auf dem Sintertiegel aufliegen und somit die zu sinternden Objekte umgeben. Der entstehende Spalt zwischen Sintertiegel und Innenhaube ist möglichst eng auszulegen. Dennoch ist eine direkte Berührung unzweckmäßig, da der verbrannte Kohlenstoff abtransportiert werden muss.

Des Weiteren besteht die Möglichkeit, dass eine auf der Bodenplatte aufliegende Außenhaube eine auf dem Sintertiegel aufliegende Innenhaube umgibt. Der durch die Bodenplatte und der Haube einschließende Sinterraum kann auch von einer weiteren Haube eingeschlossen werden, so dass die erste Haube durch eine zweite Haube umgeben ist.

Es ist ein definierter waagrechter Abstand von 0.05 bis 0.2 mm zwischen der Haube und dem Sintertiegel zweckmäßig. Das bedeutet, dass die gegenüberliegenden vertikalen Seiten der Haube und des Sintertiegels einen Abstand von 0.05 bis 0.2 mm aufweisen würden.

Der Sintervorgang wird im Temperaturbereich von 1250°C bis 1370°C, vorzugsweise von 1340°C bis 1350°C, durchgeführt. Es werden somit hohe Anforderungen an die verwendeten Materialien für die Vorrichtung gestellt. Die Vorrichtung beinhaltet die Werkstoffe X8CrAl20-5 oder ähnliche Legierungen und/oder NiCr25FeAlY. Die Haube und/oder der Sintertiegel beinhalten entweder rekristallisiertes Siliziumkarbid oder Kanthal. Diese Werkstoffe sind temperaturbeständig und besitzen keine schädlichen Stoffe, die während des Sintervorgangs abdiffundieren.

Eine bevorzugte Ausführungsvariante besteht darin, dass das Tiegelschalen-Tragmittel zwei Einzelteile bzw. zwei Bauteile, z.B. eine Trägerplatte und eine Deckplatte, umfasst. In dieser Deckplatte befindet sich eine Bohrung, die einen kleineren Durchmesser als die Schutzgaszufuhr und/oder Schutzgasabfuhr besitzt. Die Deckplatte besitzt des Weiteren einen durchgehend, um eine Achse umlaufenden Ringfuß, der am Rand der Deckplatte angeordnet ist und sich fast über die gesamte Fläche der Deckplatte zieht. Mittig und auf einer Achse angeordnet weist die Deckplatte einen Strömungskanal auf, der sich über die Schutzgaszufuhr und Schutzgasabfuhr erstreckt. Das in die Schutzgaszufuhr eingeleitete Schutzgas strömt in den Strömungskanal zwischen Deckplatte und Bodenplatte. Durch die spaltartige Verengung wird das Schutzgas beschleunigt und strömt an der Bohrung der Deckplatte vorbei bis zur Schutzgasabfuhr. Dabei wird eine Art Venturieffekt erzielt. Das Schutzgas wird an einer mit der Schutzgasabfuhr in Verbindung stehenden Bohrung zur Erzeugung des Venturieffektes vorbeigeleitet. Es entsteht so im oberen Bereich des Sinterraumes ein leichter Unterdruck aufgrund des Sogeffektes, der verhindert, dass Gas von unten nach oben strömt. Sauerstoffreste werden also quasi abgesaugt.

Eine weitere bevorzugte Ausführungsvariante besteht darin, das durch die spaltartige Verengung beschleunigte Schutzgas direkt auf die unvermeidbare umlaufende Undichtigkeit strömen zu lassen. Dies geschieht indem das Tiegelschalen-Tragmittel bzw. die Deckplatte einen mittig angeordneten umlaufenden Ringfuß oder mindestens zwei Einzelfüße am Rand des Tiegelschalen-Tragmittels aufweist. Die Gasströmung darf nicht durch Ausgestaltungen der Bauteile bzw. der Einzelfüße behindert werden. Die Höhe der Einzelfüße und somit die Höhe des Strömungsspalts und/oder des Strömungskanals oder die Breite des Umlaufspalts muss immer kleiner sein als die Querschnittsfläche oder eine Querschnittserstreckung der Schutzgaszufuhr und/oder der Schutzgasabfuhr, damit eine Beschleunigung des Schutzgases hervorgeht. Durch den Strömungsspalt strömt das Schutzgas an die unvermeidbare Undichtigkeit. Der Strömungsspalt, Umlaufspalt oder Strömungskanal ist oberhalb von der unvermeidbaren, diskreten oder kontinuierlich umlaufenden Undichtigkeit bei der Auflagefläche zwischen Vorrichtungs-Mantelteilen angeordnet. Diese Auflagefläche erstreckt sich insbesondere zwischen der Haube und der Bodenplatte. Dadurch wird der eindringende Sauerstoff entweder mit dem Schutzgas verwirbelt oder der Sauerstoff wird "zurück gehalten", da das Edelgas schwerer als Luft bzw. Sauerstoff ist.

Die Schutzgaszufuhr und Schutzgasabfuhr werden mittels Leitungen an das Schutzgas angeschlossen. Diese Leitungen sind mit Ventilen versehen, um eine kontrollierte Kohlenstoffverbrennung zu erzielen. Nach einem erfindungsgemäßen Ausführungsbeispiel wird eine Schutzgas-Konvektionsströmung im Sinterraum und/oder entlang der Innenseite der Haube, gegebenenfalls in Wirkungsverbindung mit vorzugsweise außerhalb der Haube angeordneten Heizelementen oder sonstigen aktiven Wärmequellen, erzeugt.

Weitere Einzelheiten, Merkmale, Merkmalskombinationen und Wirkungen auf der Basis der Erfindung ergeben sich aus der nachfolgenden Beschreibung bevorzugter, beispielhafter Ausführungsformen der Erfindung sowie aus den Zeichnungen. Diese zeigen in:
- Figur 1: ein Ausführungsbeispiel einer erfindungsgemäßen Vorrichtung im vertikalen Querschnitt
- Figur 2: eine Ansicht des Tiegelschalen-Tragmittels **15** von unten gemäß des Ausführungsbeispiels in Fig. 1
- Figur 3: ein weiteres Ausführungsbeispiel einer erfindungsgemäßen Vorrichtung im vertikalen Querschnitt
- Figur 4: eine Ansicht des Tiegelschalen-Tragmittels **15** von unten gemäß des Ausführungsbeispiels in Fig. 3
- Figur 5: ein weiteres Ausführungsbeispiel einer erfindungsgemäßen Vorrichtung im vertikalen Querschnitt
- Figur 6: eine Ansicht des Deckplatte **3** von unten gemäß des Ausführungsbeispiels in Fig. 5
- Figur 7: ein weiteres Ausführungsbeispiel einer erfindungsgemäßen Vorrichtung im vertikalen Querschnitt
- Figur 8: ein weiteres Ausführungsbeispiel einer erfindungsgemäßen Vorrichtung im vertikalen Querschnitt

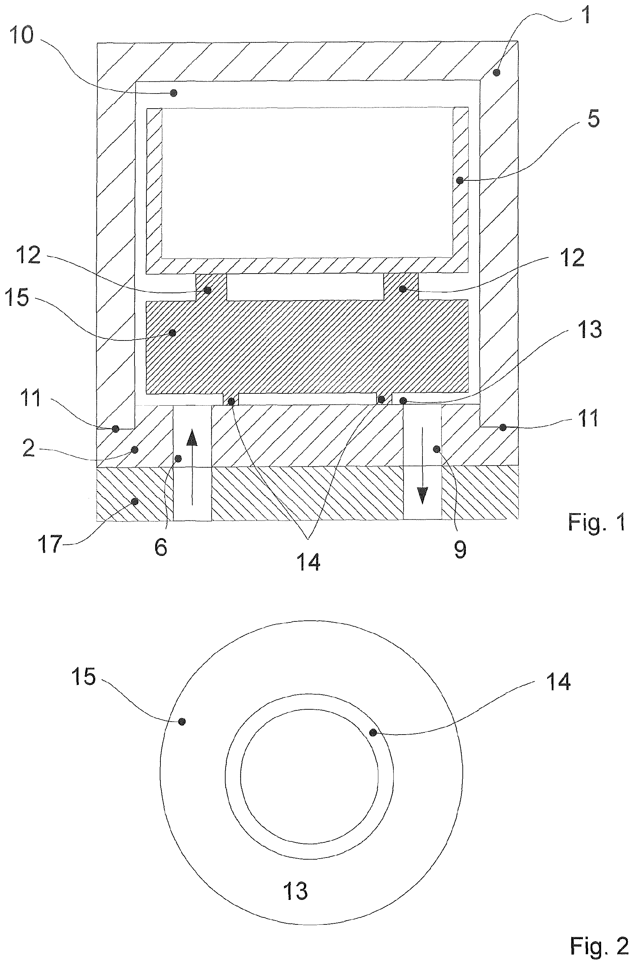

Gemäß Figur 1 ist die erfindungsgemäße sauerstofffreie Sintervorrichtung zu sehen, die den Sinterraum **10** mit einer Haube **1** und einer Bodenplatte **2** einschließt oder umgibt. Die Bodenplatte liegt auf einem Schamotteblock oder Keramiksockel **17** auf, wodurch vor allem für das zugeführte und abgeführte Schutzgas eine Wärmeisolation erzielt wird. Der Sinterraum **10** kann als Einheit aus dem Sinterofen entnommen werden oder er kann im eigentlichen Sinterofen getrennt werden, indem die Haube **1** von der Bodenplatte **2** abgenommen wird. Die Bodenplatte **2** weist eine ringartig umlaufende Auflagefläche **11** auf, die sich am äußeren Rand der Bodenplatte **2** befindet und die unvermeidbare Undichtigkeit hervorruft. Die Haube **1** steht auf der Bodenplatte **2** auf der dafür vorgesehenen Auflagefläche **11** und umgibt auch einen Teil der Bodenplatte **2.** In der Bodenplatte **2** ist eine Schutzgaszufuhr **6** und eine Schutzgasabfuhr **9** vorgesehen, damit das Schutzgas, wie zum Beispiel Argon, in und aus den Sinterraum **10** strömen kann. Des Weiteren ist ein Tiegelschalen-Tragmittel **15** auf der Bodenplatte **2** angeordnet. Das Tiegelschalen-Tragmittel **15** weist einen mittig angeordneten oder um eine Achse umlaufenden Ringfuß **14** auf, wodurch ein Umlaufspalt **13** zwischen Bodenplatte **2,** Haube **1** und Tiegelschalen-Tragmittel **15** entsteht. Die inneren Stirnöffnungen der Schutzgaszufuhr **6** und Schutzgasabfuhr **9** münden radial außerhalb des umlaufenden Ringfußes **14,** so dass das einfließende Schutzgas die sich im Sinterraum **10** befindenden Sauerstoffreste abtransportieren kann. Dieser Effekt entsteht durch die Beschleunigung des Schutzgases und der Erniedrigung des Druckes im Sinterraum **10.** Das Tiegelschalen-Tragmittel **15,** das auf der Bodenplatte **2** steht, trägt einen Sintertiegel **5,** in dem sich das oder die zu sinternden Objekte befinden.

In der Figur 2 ist das Tiegelschalen-Tragmittel **15** von unten mit seinem in eine vertikale Mittelachse konzentrisch oder symmetrisch umlaufenden Ringfuß **14** dargestellt. Der Bereich zwischen Außendurchmesser des Ringfußes **14** und dem Außendurchmesser des Tiegelschalen-Tragmittels **15** stellt den Umlaufspalt **13** dar, der zur Erhöhung der Fließgeschwindigkeit dient und somit ein Abführen von Sauerstoffpartikeln im Sinterraum **10** bewirkt.

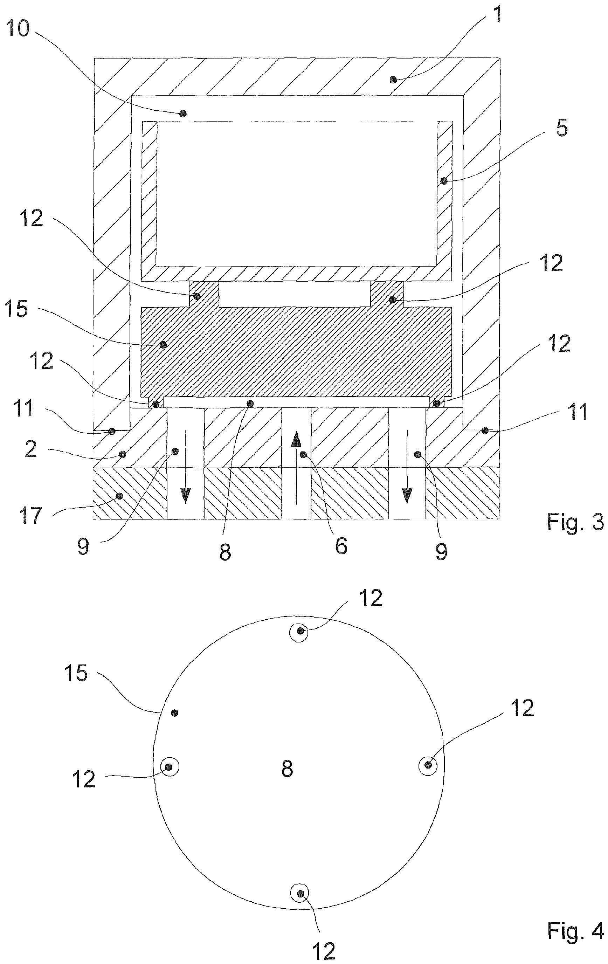

Gemäß Figur 3 ist ein weiteres Ausführungsbeispiel für eine Vorrichtung für sauerstofffreies Sintern skizziert. Der Unterschied zu Figur 1 liegt darin, dass die Bodenplatte **2** gemäß Figur 3 eine mittig sitzende Schutzgaszufuhr **6** sowie in peripherer Lage beispielsweise achssymmetrisch angeordnete Schutzgasabfuhrmittel **9,** beispielsweise Abfuhrbohrungen, besitzt. Auf der Bodenplatte **2** liegt ein Tiegelschalen-Tragmittel **15** über seine diskret nach unten vorspringende Einzelfüße **12** auf, wozwischen das Schutzgas zum Sinterraum **10** strömen kann. Das Schutzgas wird durch die Schutzgaszufuhr **6** zwischen den Einzelfüßen **12** hindurch nach oben in den Sinterraum **10** eingeleitet und durch die mittels des relativ schmalen Strömungsspalts **8** (Abmessungsbeispiel: von 0,1 bis 0,9 mm) gebildete Verengung zwischen Bodenplatte **2** und Tiegelschalen-Tragmittel **15** beschleunigt. Dadurch werden die im Sinterraum **10** vorhandenen Sauerstoffrestmengen aufgewirbelt und vom Schutzgas über die Schutzgasabfuhrbohrungen **9** abgeführt.

In der Figur 4 ist das Tiegelschalen-Tragmittel **15** mit seinen vorspringenden Einzelfüßen **12** aus Figur 3 mit der Ansicht von unten dargestellt. Seine Unterseite bildet die obere Begrenzung des relativ engen Strömungsspaltes **8.**

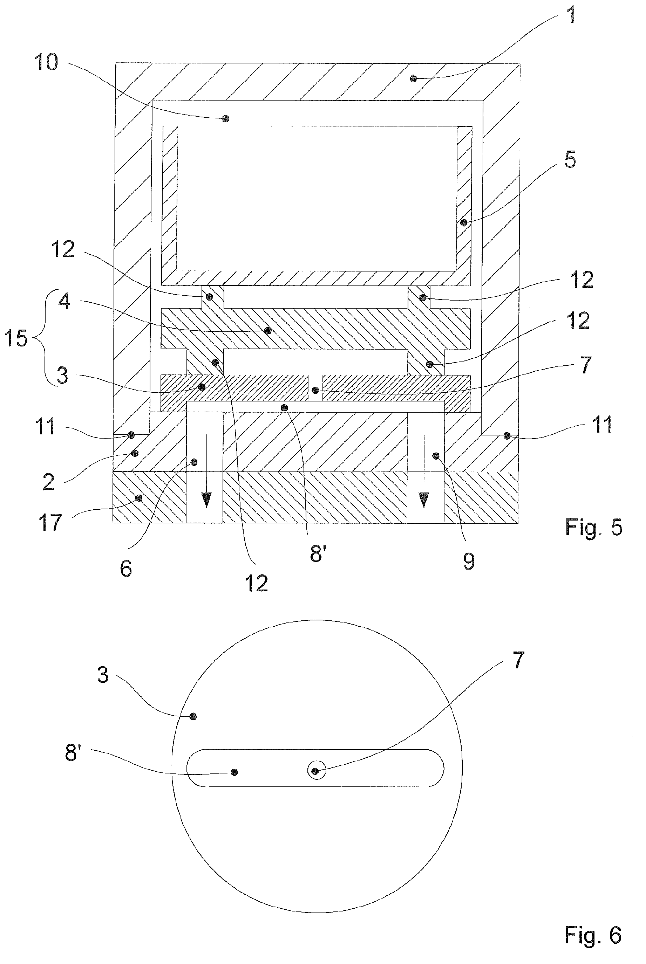

Die Figur 5 zeigt ein weiteres Ausführungsbeispiel, bei dem das Tiegelschalen-Tragmittel **15** eine Trägerplatte **4** und eine letztere tragende Deckplatte **3** aufweist. Dazu ist die Trägerplatte **4** mit voneinander beabstandet bzw. diskret angeordneten Einzelfüßen **12** versehen, die von ihrer Unterseite nach unten vorspringen und auf der Oberseite der Deckplatte **3** aufstehen. Zwischen ihnen kann Schutzgas strömen. Die Deckplatte **3** ist von einer mittig oder zentrisch angeordneten, vertikalen Bohrung **7** axial durchsetzt, die in einen Strömungskanal **8'** mündet. Dieser erstreckt sich von der Schutzgaszufuhr **6** zur Schutzgasabfuhr **9,** wobei diese miteinander verbunden werden. Zweckmäßig ist der Strömungskanal **8'** mit einer nut- oder rinnenartigen, relativ schmalen, vorzugsweise geradlinigen Ausnehmung in der Unterseite der Deckplatte **3,** der Bodenplatte **2** gegenüberliegend, realisiert.

Wie auch aus Figur 6 zu entnehmen ist, fließt das Schutzgas durch den relativ schmalen, den Strömungsweg verengenden Strömungskanal **8'** mit resultierender Erhöhung der Strömungs-Geschwindigkeit an der Bohrung **7** vorbei, wodurch ein Venturi-Effekt erzielt wird. Hierdurch entsteht im oberen Bereich des Sinterraums **10** ein leichter Unterdruck oder Sog, der verhindert, dass das Schutzgas oder Sauerstoff-Argon-Gemisch von unten nach oben strömt.

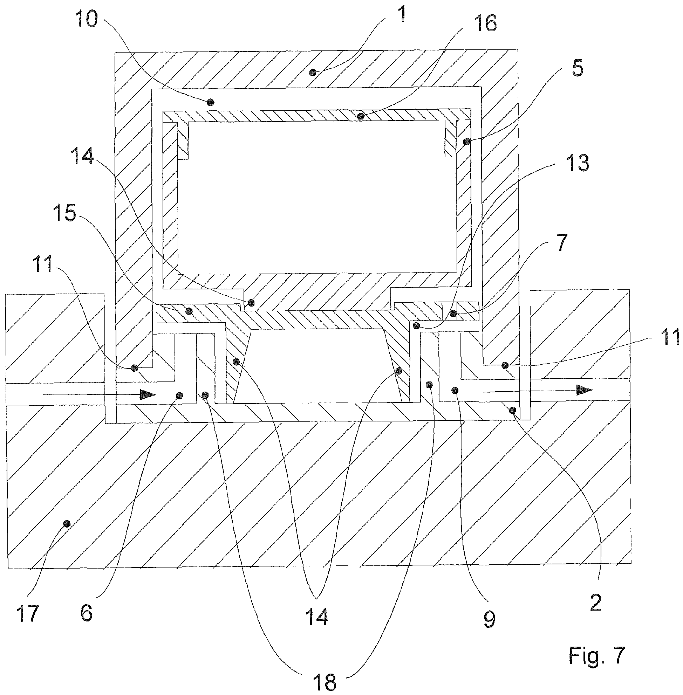

Gemäß Figur 7 weist das plattformartige Tiegelschalen-Tragmittel **15** einen vorzugsweise axialsymmetrisch nach unten vorspringenden, ringartig umlaufenden Ringfuß **14** zum Aufstand auf der gegenüberliegenden Oberseite der Bodenplatte **2** auf. Von der Bodenplatte erhebt sich in das Vorrichtungsinnere ein mit dem Ringfuß **14** konzentrischer oder koaxialer Ringvorsprung **18,** wobei zwischen beiden ein ringförmiger Umlaufspalt **13** gebildet wird. Dieser mündet über eine vorzugsweise rechtwinklige Krümmung radial auswärts in Richtung zur Innenwandung der Haube **1** und damit in den Sinterraum **10.** Komplementär zum im Querschnitt L-artiges Profil aufweisenden Umlaufspalt **13** verlaufen die Durchgänge der Schutzgas-Zufuhr **6** und -Abfuhr **9** auch mit rechtwinkliger bzw. L-artiger Krümmung, wobei sie von radial außen in die Bodenplatte **2** einmünden und über die rechtwinklige Krümmung deren Ringvorsprung **18** durchsetzen und dabei in den radial nach außen verlaufenden Abschnitt des Umlaufspalts **13** einmünden. An diesem Umlaufspalt **13** wird das durch die Schutzgaszufuhr **6** eingeleitete Schutzgas zur Schutzgasabfuhr **9** vorbei an der Bohrung **7** geleitet, welche in peripherer Lage die Tiegelschalenplattform **15** achsparallel durchsetzt (grundsätzlich auch schräg möglich). Durch die spaltartige Verengung im Umlaufspalt **13** wird das Schutzgas beschleunigt, wodurch ein Venturi-Effekt erzielt wird. Analog zur Figur 6 entsteht im oberen Bereich des Sinterraums **10** ein leichter Unterdruck oder Sog, der einem Strömen des Schutzgases oder des Sauerstoff-Argon-Gemisches von unten nach oben entgegensteht.

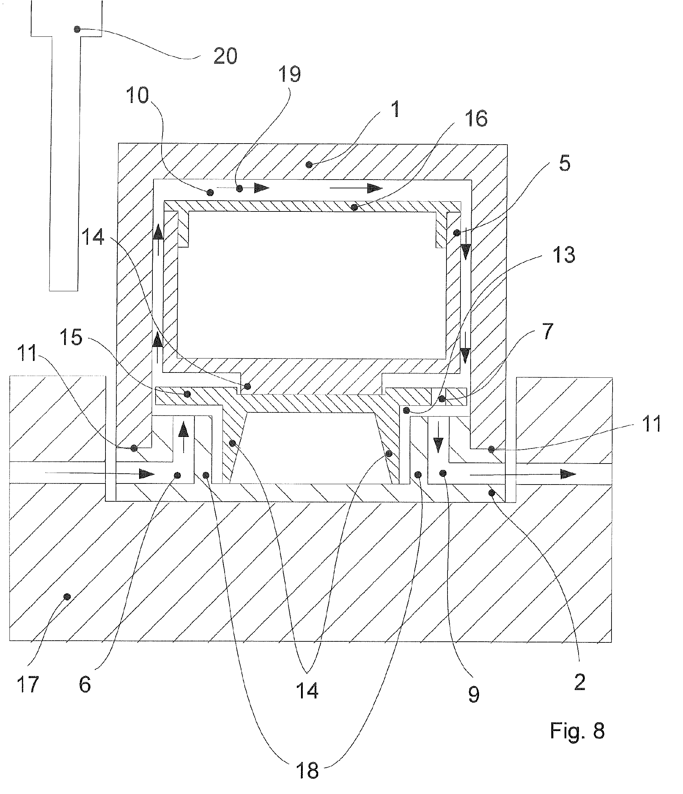

Ähnlich wie nach Figur 7 ist auch nach Figur 8 die Bodenplatte **2** sowie der unterste Teil oder das untere Stirnende der Haube **1** in einem Schamottblock oder Keramiksockel **17** eingebettet. Dieser ist von der Zufuhr **6** und der Abfuhr **9** jeweils für Schutzgas von der Außenseite bzw. vom Außenmantel nach gegebenenfalls radial innen bis hin zu dem vorbeschriebenen L-artigen Verlauf durchsetzt. Damit wird eine Wärmeisolation für die Schutzgas-Zufuhr und -abfuhr bewirkt, was wiederum die Ausprägung einer Konvektionsströmung **19** innerhalb des Sinterraums **10** um den Sintertiegel **5** herum fördert. Die Konvektionsströmung **19** kann dann nach Umströmen des Sintertiegels **5** in die Bohrung **7** und, den Umlaufspalt **13** querend, in die Schutzgas-Abfuhr **9** münden. Der Ausprägung der Konvektionsströmung **19** dient auch ein Heizelement **20,** welches außerhalb, aber in Wirkungsverbindung mit der Haube **1** und unmittelbar oberhalb des Keramiksockels **17** angeordnet ist. So wird eine besondere partielle Schutzgaserwärmung gezielt im Bereich der Zufuhr 6 zwecks Erzeugung der Konvektionsströmung **19** bewirkt.

Um zu verhindern, dass Sauerstoff in den Bereich des Sintertiegels **5** eindiffundiert, ist der Spalt zwischen dem Sintertiegel **5** und der Haube **1** möglichst eng auszulegen. Er sollte daher in dem Bereich von 0,05 bis 0,2 mm liegen. Eine direkte Berührung wäre unzweckmäßig wegen der unterschiedlichen Wärmeausdehnung dieser Bauteile.

Da bei der Sinterung Temperaturen von ca. 1250°C bis 1370°C, beispielsweise ca. 1300°C, erzeugt werden, sind an die Werkstoffe der Vorrichtung hohe Anforderungen gestellt. Die eingesetzten Materialien müssen einerseits temperaturfest sein, andererseits darf das Material keine schädlichen Stoffe abdiffundieren, die zu einer Verfärbung oder Schädigung des Sintermaterials führen. Als Material bietet sich, wie in früheren Schriften erwähnt, Quarzglas oder rekristallisiertes Siliziumkarbid an. Die Haube **1** sowie auch der Sintertiegel **5** können aus rekristallisiertem Siliziumkarbid oder aus Kanthal bestehen. Noch geeigneter erscheinen hochtemperaturbeständige Edelstähle. Beispielhaft hierfür ist der mit Yttrium und Hafnium legierte aluminiumhaltige ferritische Chromstahl mit der Werkstoffbezeichnung X8CrAl20-5, der auch unter dem Namen Kanthal bekannt ist. Eine Alternative hierzu ist die hochkohlenstoffhaltige Nickel-Chrom-Eisen-Legierung mit der Werkstoffbezeichnung NiCr25FeAlY.

### Bezugszeichenliste

- 1: Haube
- 2: Bodenplatte
- 3: Deckplatte
- 4: Trägerplatte
- 5: Sintertiegel
- 6: Schutzgaszufuhr
- 7: Bohrung
- 8: Strömungsspalt
- 8': Strömungskanal
- 9: Schutzgasabfuhr
- 10: Sinterraum
- 11: Auflagefläche
- 12: Einzelfuß
- 13: Umlaufspalt
- 14: umlaufender Ringfuß
- 15: Tiegelschalen-Tragmittel
- 16: zweite Haube
- 17: Keramiksockel
- 18: Ringvorsprung
- 19: Konvektionsströmung
- 20: Heizelement

## Patentansprüche

1. Vorrichtung zum sauerstofffreien Sintern von Metall oder Keramik, insbesondere für die Dentaltechnik, bei der ein mit Schutzgas beaufschlagbarer Sinterraum (10) durch eine Bodenplatte (2) und eine Haube (1) gebildet ist, wobei das Schutzgas mittels einer Schutzgaszufuhr (6) einleitbar und über eine Schutzgasabfuhr (9) abführbar ist, wobei zwischen der Schutzgaszufuhr (6) und der Schutzgasabfuhr (9) ein Strömungskanal (8') und/oder ein Strömungsspalt (8) angeordnet sind, **dadurch gekennzeichnet, dass** die Durchgänge der Schutzgaszufuhr (6) und der Schutzgasabfuhr (9) sowie des Strömungsspalts (8) oder Strömungskanals (8') jeweils eine quer zur Strömungsrichtung verlaufende, lichte Innenweite aufweisen, wobei die Innenweiten der Schutzgaszufuhr- und/oder Schutzgasabfuhr-Durchgänge weiter sind als die Innenweiten des Strömungsspalts (8) oder Strömungskanals (8').

2. Vorrichtung nach Anspruch 1, **dadurch gekennzeichnet, dass** der Strömungsspalt (8) und/oder der Strömungskanal (8') zumindest teilweise als Umlaufspalt (13) gestaltet sind, indem sie um eine Mittelachse geführt sind, wobei der Umlaufspalt (13) eine quer zur Strömungsrichtung verlaufende, lichte Innenweite aufweist und wobei die Innenweiten der Schutzgaszufuhr- oder Schutzgasabfuhr-Durchgänge weiter sind als die Innenweite des Umlaufspalts (13).

3. Vorrichtung nach einem der vorangehenden Ansprüche, **dadurch gekennzeichnet, dass** ein Sintertiegel (5) auf dem oder den Tiegelschalen-Tragmitteln (15) oder auf der Bodenplatte (2) aufliegt und die gegenüberliegenden vertikalen Seiten der Haube (1) und des Sintertiegels (5) einen Abstand von 0.05 bis 0.2 mm aufweisen.

4. Vorrichtung nach einem der vorangehenden Ansprüche, **dadurch gekennzeichnet, dass** der Strömungskanal (8') und/oder Strömungsspalt (8) das Schutzgas zur Erzeugung eines Venturieffektes an einer Bohrung (7) vorbeigeleitet wird, die vorzugsweise mit der Schutzgasabfuhr (9) in Verbindung steht.

5. Vorrichtung nach einem der vorangehenden Ansprüche, **dadurch gekennzeichnet, dass** sich zwischen der Bodenplatte (2) und Tiegelschalen-Tragmittel (15) oder einem Sintertiegel (5) der Strömungsspalt (8) und/oder der Strömungskanal (8') befinden, der beziehungsweise die an mindestens einer Schutzgaszufuhr (6) und/oder Schutzgasabfuhr (9) vorbeiführen.

6. Vorrichtung nach einem der vorangehenden Ansprüche, **dadurch gekennzeichnet, dass** das Tiegelschalen-Tragmittel (15) oder der Sintertiegel (5) zur Bodenplatte (2) hin mindestens zwei diskrete Einzelfüße (12) oder einen um eine Achse umlaufenden Ringfuß (14) besitzt.

7. Vorrichtung nach einem der Ansprüche 3 bis 6, **dadurch gekennzeichnet, dass** die Haube (16) auf dem Sintertiegel (5) aufliegt und somit die zu sinternden Objekte umgibt.

8. Vorrichtung nach einem der Ansprüche 3 bis 7, **dadurch gekennzeichnet, dass** eine auf der Bodenplatte (2) aufliegende Außenhaube (1) eine auf dem Sintertiegel (5) aufliegende Innenhaube (16) umgibt.

9. Vorrichtung nach einem der vorangehenden Ansprüche, **dadurch gekennzeichnet, dass** die Schutzgaszufuhr (6) und/oder Schutzgasabfuhr (9) an einer Außenfläche der Haube (1) angeordnet sind.

10. Vorrichtung nach einem der vorangehenden Ansprüche, **dadurch gekennzeichnet, dass** sich der Strömungsspalt (8), Umlaufspalt (13) oder Strömungskanal (8') oberhalb von einer unvermeidbaren, diskreten oder kontinuierlich umlaufenden Undichtigkeit bei einer Auflagefläche (11) zwischen der Haube (1) und Bodenplatte (2) erstreckt.

11. Vorrichtung nach einem der vorhergehenden Ansprüche, **dadurch gekennzeichnet, dass** die Vorrichtung die Werkstoffe X8CrAl20-5 oder ähnliche Legierungen und/oder NiCr25FeAlY beinhaltet und/oder die Haube (1) und/oder der Sintertiegel (5) entweder rekristallisiertes Siliziumkarbid oder Kanthal beinhaltet.

12. Verwendung einer Vorrichtung nach einem der Ansprüche 1 bis 11, zur Erzielung eines Abführens von Sauerstoffpartikeln im Sinterraum (10), indem beim mit dem Sinterraum (10) in Wirkungsverbindung tretenden Schutzgas eine Erhöhung der Fließgeschwindigkeit und Erniedrigung des Druckes herbeigeführt werden.

13. Verwendung nach Anspruch 12, **dadurch gekennzeichnet, dass** durch den Strömungsspalt (8) oder den Strömungskanal (8') mittels des eingeleiteten Schutzgases etwa eindringender Sauerstoff abtransportiert wird, wobei eine etwa aufgewirbelte Sauerstoffrestmenge über eine mit der Schutzgasabfuhr (9) in Verbindung stehende Bohrung (7) abgeführt wird, welche in dem oder den Tiegelschalen-Tragmitteln (15) angeordnet ist.

14. Verwendung nach Anspruch 12 oder 13, **dadurch gekennzeichnet, dass** der Sintervorgang im Temperaturbereich von 1250°C bis 1370°C, vorzugsweise von 1340°C bis 1350°C, durchgeführt wird.

15. Verwendung nach einem der vorangehenden Ansprüche zur Erzeugung einer Schutzgas-Konvektionsströmung im Sinterraum (10) und/oder entlang der Innenseite der Haube (1), gegebenenfalls in Wirkungsverbindung mit vorzugsweise außerhalb der Haube (1) angeordneten, einem oder mehreren Heizelementen (20) oder sonstigen aktiven Wärmequellen.

## Claims

1. A device for the oxygen-free sintering of metal or ceramics, in particular for dental technology, wherein a sintering chamber (10) that can be supplied with protective gas is formed from a base plate (2) and a hood (1), the protective gas being able to be introduced by means of a protective gas inlet (6) and being able to be discharged via a protective gas outlet (9), a flow channel (8') and/or a flow gap (8) being located between the protective gas inlet (6) and the protective gas outlet (9), **characterised in that** the passages for the protective gas inlet (6) and the protective gas outlet (9) and of the flow gap (8) or flow channel (8') each have a clear internal width running transversely to the direction of flow, the internal widths of the protective gas inlet and/or protective gas outlet passages being wider than the internal widths of the flow gap (8) or flow channel (8').

2. The device according to Claim 1, **characterised in that** the flow gap (8) and/or the flow channel (8') are made at least partially in the form of a circumferential gap (13) in which they are guided about a centre axis, the circumferential gap (13) having a clear internal width running transversely to the direction of flow, and the internal widths of the protective gas inlet or protective gas outlet passages being wider than the internal width of the circumferential gap (13).

3. The device according to any of the preceding claims, **characterised in that** a sintering crucible (5) lies on the crucible bowl supporting means (15) or on the base plate (2), and the opposing vertical sides of the hood (1) and of the sintering crucible (5) are spaced apart by 0.05 to 0.2 mm.

4. The device according to any of the preceding claims, **characterised in that** the flow channel (8') and/or the flow gap (8) conveys the protective gas past a bore hole (7) which is preferably connected to the protective gas outlet (9) in order to generate a venturi effect.

5. The device according to any of the preceding claims, **characterised in that** the flow gap (8) and/or the flow channel (8') is or are located between the base plate (2) and the crucible bowl supporting means (15) or a sintering crucible (5), which gap and/or channel lead past at least one protective gas inlet (6) and/or protective gas (9) outlet.

6. The device according to any of the preceding claims, **characterised in that** the crucible bowl supporting means (15) or the sintering crucible (5) has at least two discrete individual feet (12) or one annular foot (14) running about an axis towards the base plate (2).

7. The device according to any of Claims 3 to 6, **characterised in that** the hood (16) lies on the sintering crucible (5) and so surrounds the objects to be sintered.

8. The device according to any of Claims 3 to 7, **characterised in that** an outer hood (1) lying on the base plate (2) surrounds an inner hood (16) lying on the sintering crucible (5).

9. The device according to any of the preceding claims, **characterised in that** the protective gas inlet (6) and/or the protective gas outlet (9) is/are disposed on an outer surface of the hood (1).

10. The device according to any of the preceding claims, **characterised in that** the flow gap (8), circumferential gap (13) or flow channel (8') extends above an unavoidable, discrete or continuously circumferential leakage on a contact surface (11) between the hood (1) and the base plate (2).

11. The device according to any of the preceding claims, **characterised in that** the device contains the materials X8CrAl20-5 or similar alloys and/or NiCr25FeAlY and/or that the hood (1) and/or the sintering crucible (5) contain(s) either recrystallised silicon carbide or Kanthal.

12. The use of a device according to any of Claims 1 to 11 to achieve the discharge of oxygen particles in the sintering chamber (10) by an increase in the flow velocity and a reduction in pressure being brought about by the protective gas being operatively connected to the sintering chamber (10).

13. The use according to Claim 12, **characterised in that** any oxygen penetrating through the flow gap (8) or the flow channel (8') by means of the protective gas that is introduced is conveyed away, any residual amount of oxygen that is swirled up being discharged via a bore hole (7) connected to the protective gas outlet (9), which bore hole is located in the crucible bowl supporting means (15).

14. The use according to Claim 12 or 13, **characterised in that** the sintering process is carried out in the temperature range of 1250°C to 1370°C, preferably of 1340°C to 1350°C.

15. The use according to any of the preceding claims for generating a convection flow of protective gas within the sintering chamber (10) and/or along the inside of the hood (1), optionally operatively connected to one or a number of heating element(s) (20) or other active heating sources preferably located outside of the hood (1).

## Revendications

1. Dispositif pour le frittage sans oxygène de métal ou de céramique, en particulier pour la technique dentaire, dans lequel un espace de frittage (10) contenant un gaz protecteur est formé au moyen d'une plaque de fond (2) et d'un capot (1), dans lequel le gaz protecteur peut être introduit au moyen d'une entrée de gaz de protection (6) et peut-être évacué au moyen d'une sortie de gaz de protection (9), dans lequel entre l'entrée de gaz de protection (6) et la sortie de gaz de protection (9) sont disposés un canal d'écoulement (8') et/ou un espace d'écoulement (8), **caractérisé en ce que** les passages de l'entrée de gaz de protection (6) et de la sortie de gaz de protection (9) ainsi que de l'espace d'écoulement (8) ou du canal d'écoulement (8') ont dans chaque cas une largeur intérieure libre selon une direction transversale par rapport à la direction d'écoulement, dans lequel les largeurs intérieures des passages de l'entrée de gaz de protection et/ou de la sortie de gaz de protection sont plus larges que les largeurs intérieures de l'espace d'écoulement (8) ou du canal d'écoulement (8').

2. Dispositif selon la revendication 1, **caractérisé en ce que** l'espace d'écoulement (8) et/ou le canal d'écoulement (8') sont au moins partiellement conformés en espace circulaire, en étant disposés autour d'un axe central, dans lequel l'espace de circulation (13) a une largeur intérieure libre selon une direction transversale par rapport à la direction d'écoulement et dans lequel les largeurs intérieures des passages de l'entrée de gaz de protection ou de la sortie de gaz de protection sont plus larges que la largeur intérieure de l'espace de circulation (13).

3. Dispositif selon l'une quelconque des revendications précédentes, **caractérisé en ce qu'**un creuset de frittage (5) repose sur le ou les support(s) de corps de creuset (15) ou sur la plaque de base (2) et **en ce que** les côtés verticaux opposés du capot (1) et du creuset de frittage (5) présentent un espacement de 0,05 à 0,2 mm.

4. Dispositif selon l'une quelconque des revendications précédentes, **caractérisé en ce que** le gaz protecteur du canal d'écoulement (8') et/ou de l'espace d'écoulement (8) est conduit dans un trou (7) pour produire un effet venturi, lequel trou communique de préférence avec la sortie de gaz de protection (9).

5. Dispositif selon l'une quelconque des revendications précédentes, **caractérisé en ce que**, entre la plaque de fond (2) et le support de corps de creuset (15) ou un creuset de frittage (5) se trouvent l'espace d'écoulement (8) et/ou le canal d'écoulement (8'), lesquels communiquent respectivement avec au moins l'une de l'entrée de gaz de protection (6) et/ou de la sortie de gaz de protection (9).

6. Dispositif selon l'une quelconque des revendications précédentes, **caractérisé en ce que** le support de corps de creuset (15) ou le creuset de frittage (5) repose sur la plaque de base (2) par au moins deux pieds individuels discrets (12) ou par un pied annulaire (14) en rotation autour d'un axe.

7. Dispositif selon l'une quelconque des revendications 3 à 6, **caractérisé en ce que** le capot (16) repose sur le creuset de frittage (5) et entoure ainsi les objets à fritter.

8. Dispositif selon l'une quelconque des revendications 3 à 7, **caractérisé en ce qu'**un capot extérieur (1) reposant sur la plaque de base (2) entoure un capot intérieur (16) qui repose sur le creuset de frittage (5).

9. Dispositif selon l'une quelconque des revendications précédentes, **caractérisé en ce que** l'entrée de gaz de protection (6) et/ou la sortie de gaz de protection (9) sont disposées sur une surface externe du capot (1).

10. Dispositif selon l'une quelconque des revendications précédentes, **caractérisé en ce que** l'espace d'écoulement (8), l'espace de circulation (13) ou le canal d'écoulement (8') s'étendent au-dessus d'une fuite détournée discrète ou continue inévitable sur une surface d'appui (11) entre le capot (1) et la plaque de base (2).

11. Dispositif selon l'une quelconque des revendications précédentes, **caractérisé en ce que** le dispositif contient les matériaux X8CrAl20-5 ou alliages similaires et/ou NiCr25FeAlY et/ou le capot (1) et/ou le creuset de frittage (5) contiennent du carbure de silicium ou du kanthal non recristallisé.

12. Utilisation d'un dispositif selon l'une quelconque des revendications 1 à 11, pour réaliser une décharge de particules d'oxygène dans l'espace de frittage (10), dans laquelle on produit une augmentation de la vitesse d'écoulement et un abaissement de la pression par la coopération du gaz de protection et de l'espace de frittage (10).

13. Utilisation selon la revendication 12, **caractérisée en ce que**, à travers l'espace d'écoulement (8) ou le canal d'écoulement (8') est évacuée au moyen du gaz de protection une certaine quantité de l'oxygène pénétrant, dans laquelle une quantité résiduelle d'oxygène environnant est évacuée par le trou (7) qui est en relation avec la sortie de gaz de protection (9) et qui est disposé dans le ou les support(s) de corps de creuset (15).

14. Utilisation selon l'une des revendications 12 ou 13, **caractérisée en ce que** l'étape de frittage est effectuée dans la plage de températures de 1250 °C à 1370 °C, de préférence de 1340 °C à 1350 °C.

15. Utilisation selon l'une quelconque des revendications précédentes pour la production d'une convection de gaz protecteur dans l'espace de frittage (10) et/ou le long de la face intérieure du capot (1), éventuellement en liaison active avec un ou plusieurs éléments chauffants (20) ou d'autres sources de chaleur actives disposées de préférence à l'extérieur du capot (1).
